# EUROPEAN PATENT SPECIFICATION

(11) **EP 1 567 322 B1**
(45) Date of publication and mention of the grant of the patent: **03.06.2009**
(21) Application number: 03767669.9
(22) Date of filing: 21.11.2003
(51) Int. Cl.: B29C 67/00, D21F 7/08

(54) **THREE DIMENSIONAL TOMOGRAPHIC FABRIC ASSEMBLY**
DREIDIMENSIONALER TOMOGRAPHISCHER MEHRSCHICHTSTOFF
ENSEMBLE TOILE TOMOGRAPHIQUE A TROIS DIMENSIONS

(30) Priority: 21.11.2002 GB 0227185
(43) Date of publication of application: 31.08.2005
(73) Proprietor: Voith Patent GmbH, 89522 Heidenheim (DE)
(72) Inventor: SAYERS, Ian, Christison, Lancashire PR3 3XT (GB); HAY, Stewart, Lister, Lancashire BLO 9EH (GB)
(86) International application number: PCT/EP2003/013295
(87) International publication number: WO 2004/045834

(56) References cited:
- US-A- 5 121 329
- US-A- 5 936 861
- US-B1- 6 251 331

## Description

This invention relates to industrial nonwoven fabrics and has particular, though not exclusive, relevance to nonwoven papermachine fabrics such as forming fabrics, press felts, dryer fabrics, through-air dryer (TAD) fabrics, hydroentanglement screens and transfer fabrics for use in a papermachine. The fabrics of the invention also have application as transfer/conveyor fabrics in machines other than papermachines and may be used, for example, as conveying fabrics, or as screens for latex impregnation of conventionally air-laid materials, and for support or formation screens used in melt blowing or spun bonded nonwoven fabric manufacture.

Paper is conventionally manufactured by conveying a paper furnish, usually consisting of an initial slurry of cellulosic fibres, on a forming fabric or between two forming fabrics in a forming section, the nascent sheet then being passed through a pressing section and ultimately through a drying section of a papermaking machine. In the case of standard tissue paper machines, the paper web is transferred from the press fabric to a Yankee dryer cylinder and then creped, or alternatively on more modem machines a monofilament woven mesh dryer fabric conveys the web from the forming fabric to a through-air dryer, followed by a Yankee cylinder.

Papermachine clothing is essentially employed to carry the paper web through these various stages of the papermaking machine and to facilitate water removal from the sheet in a controlled manner. In the forming section the fibrous furnish is wet-laid onto a moving forming wire and water is encouraged to drain from it by means of suction boxes and foils. The paper web is then transferred to a press fabric that conveys it through the pressing section, where it is usually passes through a series of pressure nips formed by rotating cylindrical press rolls or cylindrical press rolls and shoe press belts. Water is squeezed from the paper web and into the press fabric as the web and fabric pass through the nip together. In the final stage, the paper web is transferred either to a Yankee dryer, in the case of tissue paper manufacture, or to a set of dryer cylinders upon which, aided by the clamping action of the dryer fabric, the majority of the remaining water is evaporated.

Papermachine fabrics traditionally consist of a woven fabric. As the warp and weft yarns interweave, a so-called "knuckles" is formed as they cross. These knuckles have a tendency to mark the paper sheet formed on the fabric. This problem is particularly apparent at the wet end of the papermachine where the sheet is still highly plastic. In recent years, various methods have been suggested for making nonwoven papermachine fabrics in order to eradicate the problem associated with knuckle marking, particularly for press and dryer section applications. Many of these have been impractical to manufacture commercially.

US 3,617,442 describes a forming fabric comprising a sheet of synthetic, open-celled, flexible foam such as polyurethane. This is reinforced by a series of polyester cables, a coarse wire screen or a thin flexible metal or plastic sheet. Such an arrangement, if ever commercialised, would exhibit poor wear resistance.

GB 2,051,154 relates to a so-called "link belt" in which a base fabric is formed from a series of interdigitated helices joined together by pintle wires. Link belts are only suitable for certain applications, due to calliper and material restrictions.

US 4,541,895 describes a papermakers' fabric made up of a plurality of nonwoven sheets laminated together to define a fabric or belt. The nonwoven sheets are perforated by laser drilling. Such sheets are composed of unoriented polymer material, and if produced in the fineness needed for papermaking applications, would lack sufficient dimensional stability to operate as endless belts on papermachines.

The subject invention of GB 2,235,705 describes a base fabric for press felts. Here an array of sheath core yarns of which the core has a higher melting point than the sheath, is fed in spaced parallel disposition to peripheral grooves of a pressed roller arranged in nip-forming relationship with a press roll. The material of the sheath is melted as the yarns move into and through the roller nip and excess melted sheath material is forced into lateral and vacant circumferential grooves in the roller to form structural members between adjacent yarns. A wide belt may be formed by joining similar strips together. A batt of fibres is subsequently needled to the base fabric so as to form a press felt. The base fabric provided in accordance with GB 2,235,705 has large land areas. Thus there is a lot of "dead" space which can result in the production of an uneven paper sheet. Also perforations through the mesh-like base fabric extend straight through the fabric. This is undesirable for paper sheet formation, where controlled dewatering is required, especially during the delicate sheet forming phase.

GB 2,241,915 relates to a method of producing a papermaking fabric in which a layer of photopolymeric resin is applied to a moving band. A moving, selectively transparent, mask is positioned above the resin and the resin is irradiated through the mask to effect an at least partial cure of the parts of the resin layer in register with the transparent regions or the mask. After irradiation uncured regions of the resin are removed by pressure fluid jets and final curing of the resin is effected either thermally or by means of flooding actinic radiation. The foraminous sheet so formed may be reinforced with yarns or fibres. Once again holes extend straight through the fabric. This is undesirable for paper sheet formation and additionally permits the occurrence of harmful "backwash" which comes from hydraulic pulses passing through the fabric from the machine side. The direct passage of these pulses disturbs the fragile cellulosic fibrous network.

GB 2,283,991 relates to papermachine clothing made from partially fused particles. A reinforcing structure is embedded within the structure. This papermachine clothing is suitable for pressing applications and possibly special forming applications.

US-A-5,936,861 describes a process and apparatus for making three-dimensional, composite material objects of a predetermined shape by sequentially depositing multiple layers of continuous reinforcement fibers and solidifying matrix material on a base member in a desired pattern. The apparatus comprises a movable nozzle having a flow passage and a dispensing outlet, a supply of reinforcement fibers and a matrix material, a mixing device for impregnating the fibers with a matrix material to form a preimpregnated tow, and a heating device for introducing the matrix material in a fluid state, a base member to support the object being made, mechanical movement devices for moving the base member relative to the movable nozzle in a predetermined sequence and pattern, and for displacing the movable nozzle a predetermined incremental distance relative to the base member and relative to each successive layer deposited prior to the start of the formation of each successive layer to form multiple layers of composite material of a predetermined thickness, and a metering device for discharging the preimpregnated tow at a predetermined rate onto the base member.

The apparatus preferably further comprises a computer-aided design computer and supporting software programs that are capable of creating a three-dimensional drawing of a desired object and converting the drawing into multiple elevation layer data, and a three-dimensional motion controller electronically linked to the mechanical movement devices and operative to actuate these movement devices in response to the drive signals received from the computer.

US 5,501,824 describes an apparatus and method of making three-dimensional objects out of a modified wax, which becomes fluid on heating. The solid wax object may easily be damaged. The method would have particular application in the production of small prototypes, which are then generally embedded in foundry moulding sand to enable a metal casting to be made. The prototypes are formed, on a vertically moveable platform, by disposing the material in a controlled manner from a nozzle. The nozzle and platform are moveable under the control of a computer such that the material dispensed from the nozzle is in the correct location to build up the prototype in the manner illustrated in a CAD system connected to the computer. Support material for the desired object is constructed first during the method, where required, and is later removed.

US 5,121,329 discloses a method of making a 3D object by what is now called Fused Deposition Modelling.

The products made in accordance with US 5,121,329 and US 5,501,824 and other rapid prototyping or Free Form Fabrication methods have generally been one-off prototypes which are generally rigid and have no function other than to aid the manufacture of an end product of similar dimensions, but which is made from a different material, for example metal.

The use of Free Form Fabrication (FFF) technology in the manufacture of papermachine clothing and other industrial fabrics has not previously been contemplated in that the potential of applying that technology to flat, wide, long flexible structures has not hitherto been considered.

For the avoidance of doubt the term "Free Form Fabrication" as used herein embraces so-called selective deposition modelling and so-called fused deposition modelling. An example of selective deposition modelling is found in US 5,501,824. An example of fused deposition modelling is found in US 5,121,329. The fabrics in accordance with the invention have particular, although not exclusive, application in the manufacture of papermachine clothing. This technology has been identified as being ideally suitable for the manufacture of forming fabrics, base fabrics for press felts and dryer fabrics.

The term Free Form Fabrication used herein describes the formation of a three-dimensional object, tomographically layer by layer, in a stepwise fashion out of a material capable of physical transformation. This may be achieved in a number of ways. In one approach (selective deposition modelling, (SDM)) layers of fluid material are laid down, stepwise, in droplet form from an inkjet printing head, in the desired locations and are each solidified as they are laid down. In an alternative approach to selective deposition modelling, fused deposition modelling (FDM) is used. Here a monofilament feed yarn is melted, and then extruded, via a micro-extruder, in fine filament form via a head which can move in x, y and z directions, i.e. vertically and horizontally in two planes. Again layers of fluid material are laid down stepwise in the desired locations and are each solidified as they are laid down.

According to the present invention there is provided a method of making a fabric from a material comprising the following steps:- feeding material from at least one nozzle onto a moveable belt, wherein said nozzle is moveable for translational movement and the spacing between said nozzle and the belt is adjustable, and wherein flow through said nozzle and translational movement of said nozzle is controlled such that said nozzle dispenses the material in a controlled manner to form the fabric layer-by-layer.

For SDM the nozzles are ideally provided in at least one feed head so as to provide a "multi-jet" arrangement, a number of nozzles being provided in each feed head. A plurality of feed heads would conventionally be used with selective deposition modelling. The flow through the nozzle is quantised; i.e. droplets are projected rather than there being a continuous stream of fluid, The nozzles together might typically be dispensing about 12,000 drops (pico litre size), per second. With fused deposition modelling one nozzle is generally provided for each micro-extruder head. The material is extruded from the nozzles.

The method of the invention, by both SDM and FDM, facilitates the manufacture of a wide variety of fabric configurations. A wide variety of foraminous fabrics may be made having any aperture size, shape and distribution. The aperture size, shape and/or distribution may be deliberately varied, within desirable tolerances, throughout (or at least in the paper support surface of) the fabric although the porosity of the fabric should be kept as uniform as possible. By providing a random distribution of hole shapes, sizes and location in the paper support surface of the fabric the undesirable periodicity associated with regular weave structures is avoided.

The fabrics of the invention ideally comprise an array of yarns extending in the intended running direction thereof, on a machine. Consequently drawn yarns, to prevent extension, are preferably added to the built up fabric. These yarns provide strength in the machine direction. The yarns are preferably monofilaments or multifilaments and are ideally made from any of the following materials: steel, polyester, polyamide, polyolefin, PPS, PEEK, para- aramid or from inorganic material, for example glass or basalt. The yarns are preferably at least partly, and ideally fully, encapsulated in the machine direction lands of the nonwoven fabric as built up in the method of the invention.

Ideally the aforesaid material for making the fabric is normally (at room temperature (20°C)) in a solid state and preferably is made molten by heating. In such circumstances the droplets of material cool and thus solidify as they are deposited.

A preferred material for making the fabric, by selective deposition modelling, comprises a low viscosity (2-200 Centipoise, more preferably 5-40 Centipoise, measured at room temperature (20 °C)) meltable polymeric material. The apparatus for use in the method of the invention may be In Vision Si2 of 3D Systems, which is for use in the manufacture of items by selective deposition modelling using electrically activated piezo crystals. Here two polymers are projected out of different nozzles of the same feed head. One polymer is the true building material and the other is a support or scaffolding material, which may comprise, for example, a modified wax. The latter material provides temporary support for subsequent layers of building material which may later be removed thermally, possibly by the application of hot water.

A preferred material for making the fabric by selective deposition modelling would comprise a meltable polymer which solidifies on cooling. Such polymers are often referred to as "phase change materials". Suitable thermoplastic materials for the construction of the fabric by selective deposition modelling include, but are not limited to, any of the following either alone or in combination:- polyamides, co-polyamides, polyesters, co-polyesters, amide esters, olefin resins, urethanes, amide urethanes and sulphones.

An alternative preferred material for making the fabric by selective deposition modelling comprises a curable material, such as a radiation curable material. For example, a UV curable resin may be used, such as an acrylate-based UV curable resin, which material solidifies on exposure to UV light. The curable material may be delivered to the apparatus in the form of a relatively viscous gel which may be heated to lower its viscosity to a suitable level to enable droplets thereof to be formed for projection out of the nozzles, which in the case of the In Vision Si2 apparatus comprise piezo crystal controlled nozzles. Suitable monomers or oligomers, which solidify under the influence of UV light of suitable wavelength, include, but are not limited to, any of the following, either alone or in combination: epoxy acrylates, polyester acrylates, silicone acrylates and urethane acrylates. Cross-linking of such materials may be promoted using a compatible photo initiator. The rate of cross-linking may, if desired, be increased using a synergist, such as an acrylated amine.

Heating of the UV curable resins may not in every case be necessary for effective production of the fabric by selective deposition modelling. However, it may nevertheless be desirable that the UV curable resin be heated in order to optimise the viscosity of the resin for projection through the nozzles of the apparatus.

With regard to preferred support or scaffolding materials, these comprise hot melt resins or waxes, said materials having melting points lower than the polymer(s) comprising the true building, or matrix, material.

In fused deposition modelling the true building, or matrix, material is preferably supplied to the dispensing head in the form of a flexible strand of solid material from a supply source, such as a reel or rod. This material is heated above its solidification temperature (Tm) by a heater and then dispensed by extrusion and applied as a fluid.

Suitable thermoplastic materials for use in making the fabric by fused deposition modelling include, but are not limited to, any of the following either alone or in combination:- polyesters, polyamides, high molecular weight polyethylenes, polyphenylene sulphide, thermoplastic polyurethanes and PEEK.

In some embodiments of the invention the resin for forming the fabric may be supplemented with a second resin or other material, which acts as a support structure for the manufacture of the fabric. This second resin or other material is ideally dissolvable or removable thermally at a temperature that does not affect the stability of the fabric. Suitable examples of such materials include any of the following either alone or in combination:- PEO (poly(2-ethyl-2-oxazoline)), polyvinyl alcohol, polyethylene oxide, methyl vinyl ether, polyvinyl pyrrolidone-based polymers, maleic acid-based polymers and alkali-soluble base polymers containing carboxylic acid and plasticiser.

The fabric filaments embodied in the structure, which are built up during the process may be of any cross-section, e.g. round, square or triangular.

The method of the invention may be used to form complicated fabric structures, with filaments of end sections, which cannot be utilised in conventional weaving. For example the fabric may comprise lands, filaments or strands which are triangular in cross-section. Yarns with such end sections would be liable to twisting or distortion during insertion into a woven fabric on a loom.

In one embodiment apertures are provided in the support surface having dimensions which would accord to those of current woven fabrics. However, fabrics having smaller apertures may be made in accordance with the method of the invention. Typically the notional diameter of the apertures would be in the range from 100 µm to 800 µm.

In order that the present invention may be more readily understood specific embodiments thereof will now be described by way of example only with reference to the accompanying drawings in which:-
Fig. 1 is a diagram of one apparatus for making a nonwoven fabric in accordance with the present invention;
Fig. 2 is a perspective view of part of one nonwoven fabric made in accordance with the present invention;
Fig. 3 is a side elevation of the nonwoven fabric of Fig. 2;
Fig. 4 is a diagrammatic illustration of the underside of the nonwoven fabric of Figs. 2 and 3 shown during various stages of construction;
Fig. 5 (including Figs. 5a and 5b) shows alternative methods of producing a fabric in accordance with the invention from a series of panels extending in the cross-machine direction each made using the apparatus of Fig. 1;
Fig. 6 shows a method of producing a fabric in accordance with the invention from a series of panels extending in the machine direction each made using the apparatus of Fig. 1;
Fig. 7 is a perspective view of a second nonwoven fabric made in accordance with the present invention;
Fig. 8 is a side elevation of a third nonwoven fabric made in accordance with the present invention;
Fig. 9 is a perspective view of a fourth nonwoven fabric made in accordance with the present invention;
Fig. 10 is a perspective view of a further nonwoven fabric made in accordance with the present invention; and
Fig. 11 is a diagram of a second apparatus for making a nonwoven fabric in accordance with the present invention.

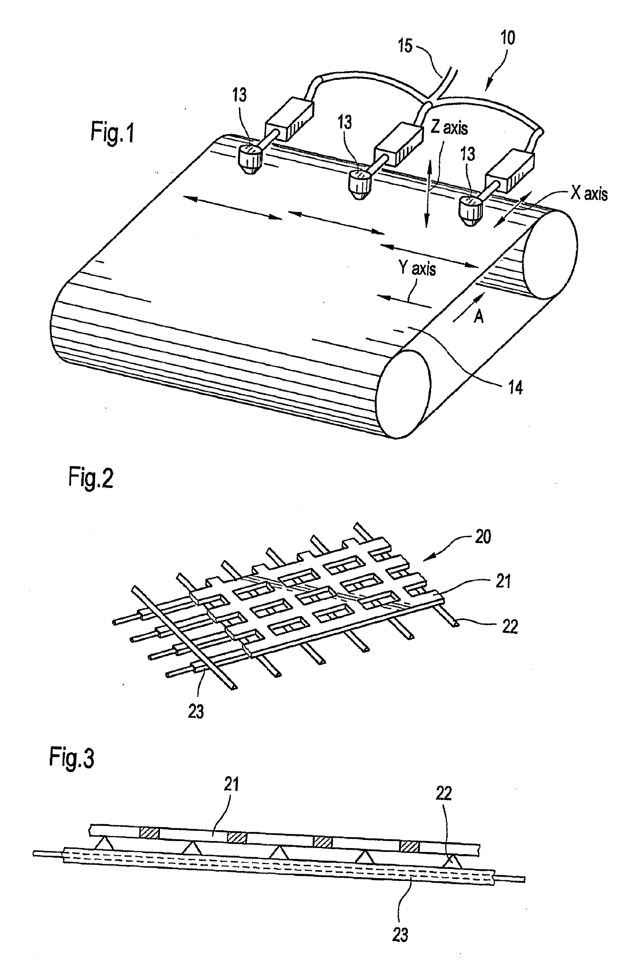

Referring to Fig. 1 an apparatus 10 for making a nonwoven forming fabric, without the disadvantage of knuckles formed by yarn interlacings, by SDM in accordance with the present invention comprises a plurality of feed heads 13 mounted in such a manner as to facilitate translational movement in both the X and Y directions as well as vertically in the Z direction. In this embodiment each feed head 13 typically comprises about 450 dispensing nozzles (not shown), although more may be used. In the Y direction the feed heads must be capable of sufficient travel such that material for making the fabric may be deposited from at least one of the nozzles of a feed head at any position in the Y-axis between the edges of the fabric being manufactured on the belt. Ideally the limitation of travel of adjacent feed heads 13 is such that the areas over which adjacent feed heads 13 may pass overlap. Vertical movement in the Z-direction of up to about 5mm is required to allow for continued precision of droplet deposition as the thickness of the product being made gradually increases.

Each feed head 13 is connected via a first flexible pipe 15 to a reservoir (not shown) of heated fluid polymeric material that is normally solid in ambient conditions and which melts when sufficiently heated. The first flexible pipe branches off to finer tubes each of which is coupled to an individual feed head. Within each feed head heated fluid polymeric material is fed via individual channels to individual nozzles. The viscosity of the molten material is preferably in the range from 2-200 Centipoise, more preferably 5-40 Centipoise, measured at room temperature (20° C). An ionic resin may be used, such as SURLYN (Trade Mark) as marketed by Du Pont. In accordance with the techniques described in US 5501824 the flow of polymeric material via a valve at the end of the nozzle 13 is controlled by a computer. That computer is connected to a CAD system on which is located a representation of the section of the nonwoven fabric being reproduced in 3D form by the apparatus.

In use the section or panel of nonwoven fabric being reproduced is formed on an endless belt 14 tensioned between two rollers. The belt would, generally speaking, comprise a fabric, optionally coated with a non-stick coating such as PTFE.

Generally speaking manufactured material would be fed from the endless belt 14 to a storage roll. Alternatively an endless product may be manufactured around the circumference of the belt 14.

A representation of the panel is provided on the CAD system. The control computer effectively slices the CAD representation into a plurality of virtual layer representations, which are together known as a building representation. The control computer uses the data on the CAD system to reproduce stepwise layer by layer of the panel of the nonwoven fabric on the belt 14 by appropriate application of the molten polymeric material. As drops of polymeric material are deposited onto the belt, or as the process progresses, onto previously solidified material, there is a rapid heat loss and the drops solidify. Accurate location and flow of the polymeric material is achieved by a combination of controlling flow of the polymer through the nozzles 13 and the precise ejection of droplets by controlled firing of the piezo electric crystals within the feed head as well as, movement of the feed head 13 in the X, Y and Z directions. In the formation of a single section or panel of the fabric the method used is much the same as that described in US 5501824, except in that a moveable belt 14 is used in place of a platform. Furthermore, strength-providing yarns are generally included in the fabric.

Once the panel is constructed in accordance with the representation on the CAD system, the belt will then advance in a controlled manner to the position to which additional material is to be added to form the next panel or panels.

After a layer of panels has been formed it may be advantageous to fill in any hollow areas in that layer with a second material in order to provide support to the next layer. This is a so-called "temporary lay down phase". This second material can be removed once manufacture is complete, for example by washing or melting when the second material has a lower melting point than the material from which the fabric is made. In order to dispense this second material certain nozzles of the dispensing heads would be connected via a second flexible pipe to a reservoir of such material and not to the fabric-forming material.

Referring to Figs. 2 and 3 part of a nonwoven fabric 20, in accordance with the invention, is illustrated. This comprises a fine planar upper grid 21 secured to the tips of a series of parallel cross-machine direction lands 22, which, in this embodiment, are triangular in section. The flat bases of these triangular lands 22 are secured to an array of parallel machine direction lands 23 which are square in cross section. The width of the paper contacting lands in the grid 21 is typically in the order of 0.1mm. The depth of this layer is typically about 0.1-0.2mm. The dimensions of the apertures defined by the lands are preferably at least 100 microns by 100 microns, though the hole shapes need not be rectangular.

It is noted that the position of the CMD lands 22 relative to the paper formation grid 21 may be varied. For example, two triangular lands 22 might cover or straddle the holes. Many variations are possible in the interests of providing optimum dewatering efficiency and performance.

Videomicroscope at magnification of 55X shows that hemispheres of polymer; i.e. micro-globules are produced on the surface of the lands in that the lands are built up from globules of polymer. These micro-globules help provide for good sheet release without resulting in marking of the paper formed on the surface of the structure.

In some circumstances it may be desirable to provide a non-planar support surface at a macroscopic level. For example, this may be useful in providing sheet release with difficult pulp mixtures. Such a surface could be conferred upon the fabric by means of a non-planar receiving belt. This could be used to provide an, at least partially, undulating fabric surface of the type described in US 5,847,102.

It is possible, by providing a flexible pipe from the feed head to an additional reservoir, to change the polymeric constituents as the structural build approaches completion on the paperside, such that the paperside surface is made of a different material to the wearside. A polymer containing fluorine could, for example, be added in the final stages of manufacture, which would be more hydro/oleophobic than its preceding layers. Thus the method of the invention provides for the manufacture of bi or even multi component structures so as to provide the completed fabric with the required characteristics.

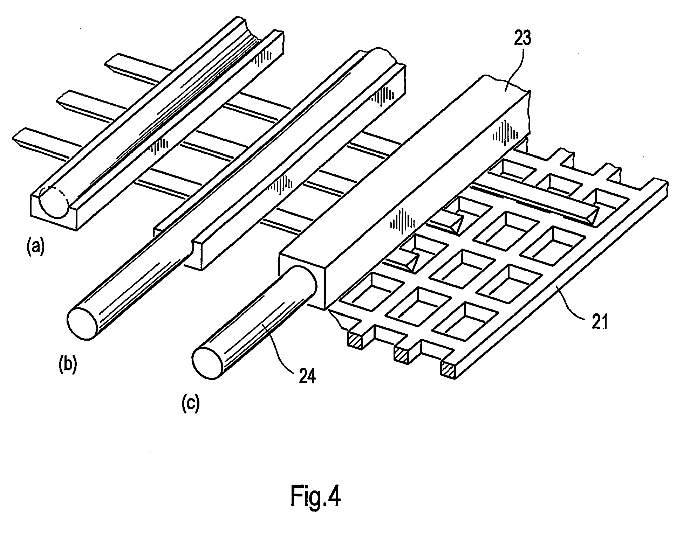

Referring to Fig. 4 a monofilament yarn 24 of maximum diameter 0.2mm is encapsulated in each of the machine direction lands 23 below the fabric supporting grid 21 so as to provide strength in the running direction of the fabrics when in use. This maximum diameter may be appropriate for forming fabrics. For other fabrics other diameters might be appropriate. For example, for dryer fabrics a maximum diameter of 0.6mm may be appropriate. These monofilament yarns could be pre-assembled in spiral fashion during manufacture. The laying down of polymeric material would take account of the very slight sideways movement of the yarns. An electronic follower could be used to establish an exact reference point before the onset of printing each panel.

In Fig. 4 the sequence of fabric build (a) to (c), at the roll side of the fabric, shows how a semi-circle is created to allow yarn to be introduced at (a). Thereafter in (b) and then (c) the jet printing of material builds up around the yarn to eventually fully encapsulate it.

The strength providing yarns in the machine direction need not be monofilaments. For example, fine multifilament yarns could be used (e.g. dtex 500). The yarns may, for example, be made of steel, polyester, polyamide, polyolefin, PPS, PEEK, para-aramid or from inorganic material, e.g. glass or basalt. Bonding to the polymeric surface may be enhanced by suitable surface treatments such as tie-coats or surface activation such as plasma treatment.

As an alternative or in addition to incorporating monofilament yarns in the machine direction lands, a nonwoven fabric of the invention may be secured on its underside, to a conventional fabric such as a woven fabric or possibly to a further nonwoven fabric or knitted fabric. The fabric of the invention can also be secured at its topside to a fine woven forming fabric to yield specific formation properties as desired or to nonwoven fibrous batts.

The fabric would preferably be built up in endless form to avoid seaming problems as are commonly encountered in the art when making seamed belts, particularly for use in papermaking. Such problems are more apparent for belts used at the wet end of the papermachine; i.e. forming fabrics. Here differential permeability between the seam and the rest of the belt can cause unacceptable marking of the paper sheet as formed in the seam area of the belt. Considerable time and effort and thus cost are involved in attempting to minimise these problems.

The fabric has particular application as a forming fabric in that it provides a fine support network for the paper furnish whilst at the same time allowing for controlled drainage, as aided by the orientation, number and cross-section of the created "yarns" or filaments within the fabric. The adoption of at least some filaments that are triangular (including substantially triangular), or other yarns having a good hydrodynamic shape, is valuable in this respect.

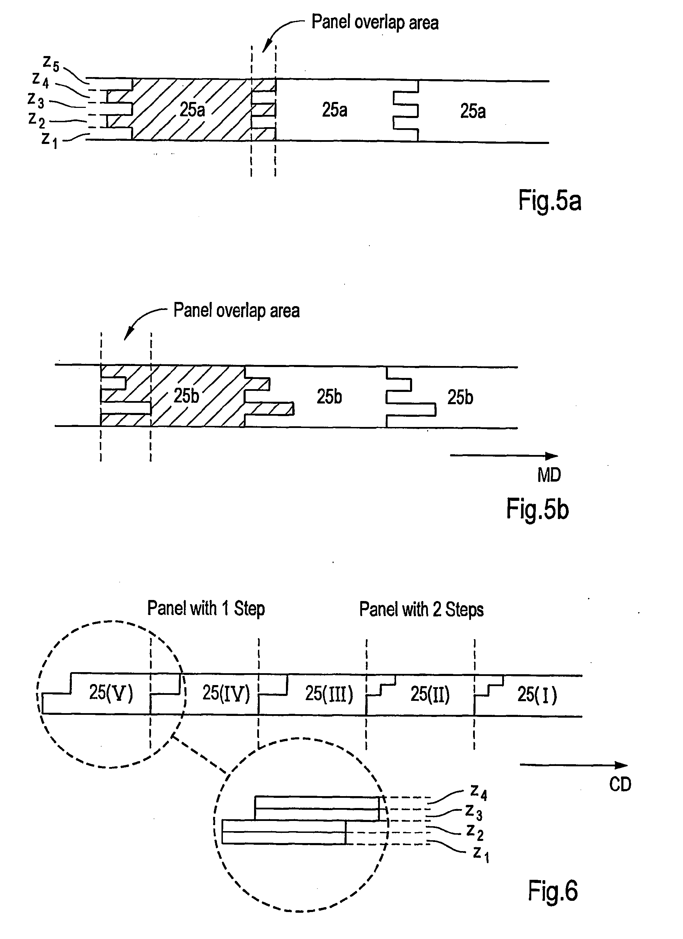

It will be appreciated that known Free Form Fabrication techniques have resulted in the formation of a non, or partially, durable temporary product of relatively small dimensions. The apparatus previously used to produce such products is not of sufficient scale to generate fabrics in accordance with the invention that might typically be 11m by 30m. The invention proposes to build up the fabric from a number of filaments extending in both the machine direction and cross machine direction. This is achieved using an array of multi-jet heads, which effectively print a series of panels in a row, ideally in the cross-machine direction. This is illustrated in Fig. 5. Here the heads are programmed by the computer to print panels 25 with multiple tongue and groove combinations, alternative arrangements being shown in Figs. 5a and 5b. In Fig. 5b some tongues are chosen to be longer than others to enhance panel bonding. In both Figs. 5a and 5b the panels are made up stepwise by a series of layers Z₁-Z₅.

The growth of the fabric in the machine direction is achieved by forming a panel, or in the case of a multi-head manufacturing assembly a series of panels, onto the moveable belt 14.

With reference to Fig. 6 it is envisaged that the support belt for the growing foraminous polymer assembly could possibly advance continuously but slowly forwards, but generally speaking and preferably, the belt would be arrested in a static state whilst a full panel consisting of discrete layers Z₁ - Z₄ is built up. This intermittent movement of the belt provides for more accurate delivery of the polymeric material. Another benefit is that maintenance of the polymer feed heads can take place whilst the belt is in a static state without detriment to any partially manufactured belt on the machine. When the complete panel 25 (i) has been constructed the belt then advances for the commencement of the following panel 25 (ii). This process is repeated until the complete belt has been manufactured in both length and width directions.

Because of the accuracy of the micro control system of the process, incomplete panels, both in the machine direction and the cross machine direction can be built-up. The lack of completion makes for better integration with adjacent panels when they are started as the processing progresses.

In the running direction an incompleted step will be left at the rear of the panel previously built up. If, for the sake of example, a foraminous belt is derived from four layers Z₁, Z₂, Z₃, Z₄, the complete panel will contain 100% of layers Z₁ and Z₂. However, layers Z₃ and Z₄ may either be the same or selected to be different. The incomplete areas, Z₃ and Z₄ are then filled in when the following panel is built up. The benefit of this split-level assembly is likely to be the derivation of a better-integrated fabric.

It can be seen that the laid-down area of all four layers is identical. Layers Z₄ and Z₃ are simply displaced in a forwards direction relative to Z₂ and Z₁. The overlap situation created aids inter panel bonding and contributes to better production uniformity.

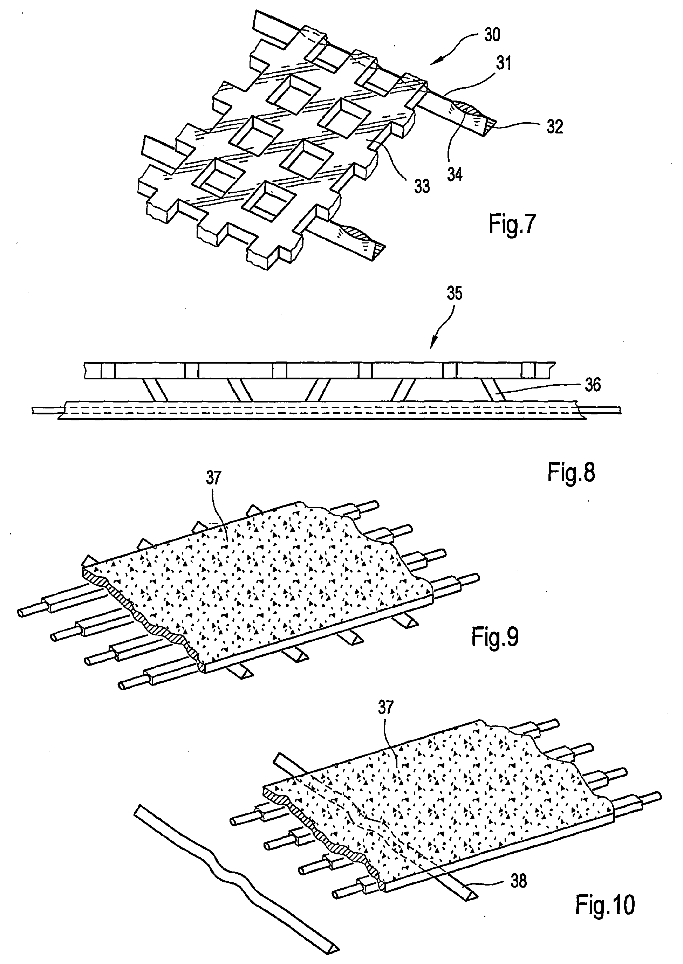

In Fig. 7 in a further fabric 30 in accordance with the invention the tips 31 of the triangular cross-machine lands 32 have been, where they contact the grid 33 located thereupon, modified to create flat areas 34. These create a large contact area for bonding to the upper grid 33. The same procedure would be adopted for filaments generated with alternative end sections.

Referring to Fig. 8 a further embodiment 35 of the nonwoven fabric of the invention is illustrated. Here the triangular end section intermediate layer has been replaced with angled ribs 36. This may serve to better control drainage.

In the embodiment illustrated in Fig. 9 a sheet 37 comprising an array of perforations of random size and shape is used to support the paper web, although the overall integrated (or average) pore size over a given area ideally remains uniform. By providing randomised topographical perforation distribution in the x-y plane, regular patterns of apertures from the forming fabric, which are conventionally replicated as a negative in the paper product, are not so replicated. Thus no regular pattern is perceptible, this so-called periodicity being considered to be undesirable in papermaking.

The fabric of Fig. 9 is made in a like manner to the other fabrics of the invention as previously described. It is relatively straightforward to build up a fabric in which a support sheet layer having a random distribution of holes is integral with regularly spaced lands located therebelow. A temporary lay down phase of wax or the like is used to fill the gaps between the lands below the intended location of the sheet and the sheet is built up over the lands and temporary filler material. This temporary material is removed, for example by washing or melting, after fabric manufacture is complete.

The embodiment of Fig. 10 is similar to that shown in Fig. 9 except that the cross-machine direction triangular lands 38 are curved so as to prevent them from encroaching upon the perforations in the paper pulp support layer 39 which is similar to that described with reference to Fig. 9.

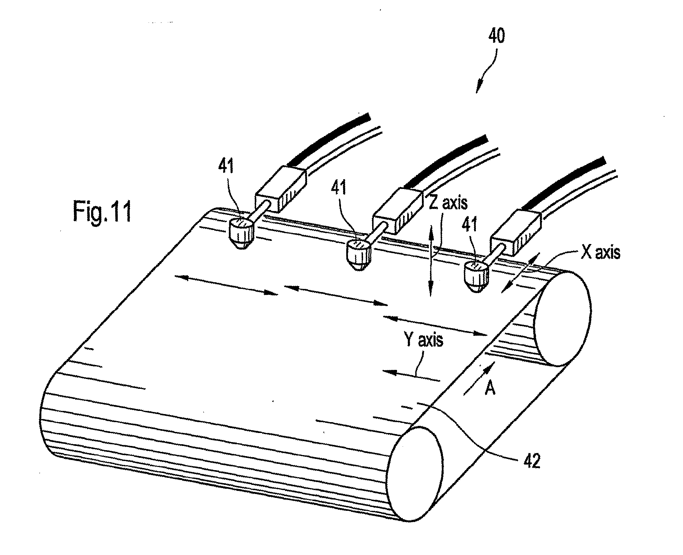

Referring to Fig. 11 a further apparatus 40 for making a nonwoven dryer fabric in accordance with the present invention comprises a plurality of feed heads 41 mounted in such a manner as to facilitate translational movement in both the X and Y directions as well as vertically in the Z direction. The apparatus 40 is similar to that disclosed in relation to Fig. 1 except that this apparatus is designed to manufacture a fabric by fused deposition modelling.

Therefore each feed head 41 comprises two sets of dispensing nozzles, one of which receives PPS plastics filament of about ¹/16 inch diameter from a feed reel. Alternatively plastics pellets might be fed from a hopper rather than a filament. The other set of dispensing nozzles is fed a filament of a second, preferably water soluble acrylic polymer, material from a second feed reel. Again, alternatively this material may be supplied via a hopper. The first plastic filament is used to manufacture the fabric, whereas the second filament is used to form the "temporary lay down phase" as discussed with reference to Fig. 1.

In use the plastic filaments are fed to the extrusion nozzles where they are heated so as to melt and thus fluidise the plastic. Extruded flow through each nozzle is controlled by a valve mechanism at the nozzle. The emerging extrudate is continuous until flow is terminated via the valve to allow the feed head to jump a deposition gap before the flow is reinstated.

Each feed head comprises two dispensing nozzles, although more may be used. Generally speaking the FDM apparatus would comprise 4 to 40, and more preferably 10 to 30, feed heads. The nozzles are movable in the X, Y and Z directions. In the Y direction the feed heads must be capable of sufficient travel such that material for making the fabric may be extruded from at least one of the nozzles of a feed head at any position in the Y-axis between the edges of the fabric being manufactured on the belt. Ideally the limitation of travel of adjacent feed heads is such that the areas over which adjacent nozzles may pass overlap. Vertical movement in the Z-direction of up to about 5mm is required to allow for continued precision of deposition of extruded material as the thickness of the product being made gradually increases. In accordance with the techniques described in US 5,501,824 the flow of polymeric material via a valve at the end of each nozzle is controlled by a computer where the work piece to be made is digitised and converted into an STL (singular tessellated language) file. The computer is connected to a CAD system on which is located a representation of the section of the nonwoven fabric being reproduced in 3D form by the apparatus.

In use the section or panel of nonwoven fabric being reproduced is formed on an endless belt 42 tensioned between two rollers. The belt 42 would, generally speaking, comprise a fabric, optionally coated with a non-stick coating such as PTFE.

A representation of the panel is provided on the CAD system. The control computer effectively slices the CAD representation into a plurality of virtual layer representations, which are together known as a building representation. The control computer uses the data on the CAD system to reproduce stepwise layer by layer of the panel of the nonwoven fabric on the belt 42 by appropriate application of a thin bead of extruded molten polymeric material to form each layer. As polymeric material is extruded onto the belt, or as the process progresses, onto previously solidified material, there is a rapid heat loss and the extruded plastic solidifies immediately bonding with any previously laid down material. Accurate location and flow of the polymeric material is achieved by a combination of controlling flow of the polymer through the nozzles in the feed head 41 via valves and movement of the feed head 41 in the X, Y and Z directions. In the formation of a single section or panel of the fabric the method used is much the same as that described in US 5,121,329, except in that a movable belt 42 is used in place of a platform. Furthermore, strength-providing yarns are generally included in the intended machine direction of the fabric.

Once the panel is constructed in accordance with the representation on the CAD system, the belt will then advance in a controlled manner to the position to which additional material is to be added to form the next panel or panels.

After a layer of panels has been formed it may be advantageous to fill in any hollow areas in that layer with a second material in order to provide support to the next layer. This is a so-called "temporary lay down phase". This second material can be removed once manufacture is complete, for example by dissolving, washing or melting when the second material has a lower melting point than the material from which the fabric is made. In order to dispense this second material certain nozzles of the dispensing heads would be connected via a second flexible pipe to a reservoir of such material and not to the fabric-forming material.

The entire system is ideally contained within a heated enclosure, which is held at a temperature just less than the melting point of the plastics being extruded. Thus only a small amount of energy needs to be supplied by the extrusion nozzle to cause the plastics to melt.

The method of manufacture using fused deposition modelling and the apparatus shown in Fig. 11 may be used to manufacture any of the structures made in accordance with the apparatus of Fig. 1 and illustrated in Figs. 2 to 4 and 7 to 10. Likewise the apparatus may be used to manufacture panels as shown in Figs. 5 and 6.

It is to be understood that the above described embodiment is by way of illustration only.

## Claims

1. A method of making a fabric from a material comprising the following steps:- feeding material from at least one nozzle (13) onto a moveable belt (14), wherein said nozzle (13) is moveable for translational movement and the spacing between said nozzle (13) and the belt (14) is adjustable, and wherein flow through said nozzle (13) and translational movement of said nozzle (13) is controlled such that said nozzle (13) dispenses the material in a controlled manner to form the fabric layer-by-layer.

2. A method as claimed in claim 1, wherein a plurality of nozzles (13) are provided in a feed head.

3. A method as claimed in claim 1, wherein a plurality of nozzles (13) are provided in a plurality of feed heads.

4. A method as claimed in any of claims 1 to 3, wherein the method of manufacturing the fabric comprises selective deposition modelling.

5. A method as claimed in any of claims 1 to 4, wherein the flow of material though the nozzle (13) is quantised.

6. A method as claimed in claim 5, wherein the nozzles (13) together dispense about 12,000 drops per second.

7. A method as claimed in any of claims 1 to 6, wherein the material is a meltable polymeric material having a viscosity in the range from 2 to 200 Centipoise measured at 20°C.

8. A method as claimed in claim 7, wherein the material is a meltable polymeric material having a viscosity in the range from 5 to 40 Centipoise measured at 20°C.

9. A method as claimed in any of claims 1 to 8, wherein the material is selected from any of the following either alone or in combination:- polyamides, co-polyamides, polyesters, co-polyesters, amide esters, olefin resins, urethanes, amide urethanes and sulphones.

10. A method as claimed in any of claims 1 to 6, wherein the material comprises a radiation curable material.

11. A method as claimed in claim 10, wherein the material comprises a UV curable material.

12. A method as claimed in claim 11, wherein the UV curable material is selected from any of the following either alone or in combination:- epoxy acrylates, polyester acrylates, silicone acrylates and urethane acrylates.

13. A method as claimed in any of claims 1 to 12, further comprising feeding from at least one nozzle, a temporary support medium for providing temporary support to said material during manufacture of the fabric layer by layer.

14. A method as claimed in claim 13, wherein said method further comprises the step of removing the temporary support medium.

15. A method as claimed in claim 13 or claim 14, wherein the temporary support medium comprises a material selected from hot melt resins and waxes.

16. A method as claimed in any of claims 1 to 3, wherein the method of manufacture of the fabric comprises fused deposition modelling.

17. A method as claimed in claim 16, wherein the material is extruded from one or more nozzles (13).

18. A method as claimed in claim 16 or claim 17, wherein the material is selected from any of the following either alone or in combination:- polyesters, polyamides, high molecular weight polyethylenes, polyphenylene sulphide, thermoplastic polyurethanes and PEEK.

19. A method as claimed in any of claims 16 to 18, wherein said material is fed to the nozzle (13) as a flexible strand of solid material.

20. A method as claimed in any of claims 16 to 19, further comprising providing a temporary support medium for providing temporary support to said material during manufacture of the fabric layer by layer.

21. A method as claimed in claim 20, wherein said method further comprises the step of removing the temporary support medium.

22. A method as claimed in claim 20 or claim 21, wherein the temporary support medium comprises a material selected from the following either alone or in combination:- poly(2-ethyl-2-oxazoline), polyvinyl alcohol, polyethylene oxide, methyl vinyl ether, polyvinyl pyrrolidone-based polymers, maleic acid-based polymers and alkali-soluble base polymers containing carboxylic acid and plasticiser.

23. A method as claimed in any of claims 1 to 22, wherein means are provided for feeding an array of machine direction yarns into the fabric.

24. A method as claimed in any of claims 1 to 23, wherein the fabric is papermachine clothing.

## Patentansprüche

1. Verfahren zur Herstellung eines Flächengebildes aus einem Material mit folgenden Verfahrensschritten: Auftrag eines Materials aus wenigstens einer Düse (13) auf ein bewegliches Band (14), wobei diese Düse (13) beweglich ist und sich verschieben lässt und der Abstand zwischen dieser Düse (13) und dem Band (14) verstellbar ist und wobei die Durchflussmenge durch diese Düse (13) und die Verschiebebewegung dieser Düse (13) so gesteuert werden, dass diese Düse (13) das Material kontrolliert zur schichtweisen Bildung des Flächengebildes ausbringt.

2. Verfahren nach Anspruch 1, wobei eine Mehrzahl von Düsen (13) in einem Auftragskopf vorgesehen ist.

3. Verfahren nach Anspruch 1, wobei eine Mehrzahl von Düsen (13) in einer Mehrzahl von Auftragsköpfen vorgesehen ist.

4. Verfahren nach einem der Ansprüche 1 bis 3, wobei das Verfahren zur Herstellung des Flächengebildes die selektive Ablagerungsmodellierung beinhaltet.

5. Verfahren nach einem der Ansprüche 1 bis 4, wobei der Materialfluss durch die Düse (13) quantisiert wird.

6. Verfahren nach Anspruch 5, wobei die Düsen (13) zusammen ca. 12.000 Tropfen pro Sekunde ausbringen.

7. Verfahren nach einem der Ansprüche 1 bis 6, wobei das Material ein schmelzbares polymeres Material mit einer bei 20 °C gemessenen Viskosität im Bereich von 2 bis 200 Centipoise ist.

8. Verfahren nach Anspruch 7, wobei das Material ein schmelzbares polymeres Material mit einer bei 20 °C gemessenen Viskosität im Bereich von 5 bis 40 Centipoise ist.

9. Verfahren nach einem der Ansprüche 1 bis 8, wobei das Material aus einem der folgenden Werkstoffe entweder einzeln oder in Kombination ausgewählt wird: Polyamide, Copolyamide, Polyester, Copolyester, Amidester, Olefinharze, Urethane, Amidurethane und Sulfone.

10. Verfahren nach einem der Ansprüche 1 bis 6, wobei das Material ein strahlungshärtbares Material beinhaltet.

11. Verfahren nach Anspruch 10, wobei das Material ein UV-härtbares Material beinhaltet.

12. Verfahren nach Anspruch 11, wobei das UVhärtbare Material aus einem der folgenden Werkstoffe entweder einzeln oder in Kombination ausgewählt wird: Epoxid-Acrylate, Polyester-Acrylate, Silikon-Acrylate und Urethan-Acrylate.

13. Verfahren nach einem der Ansprüche 1 bis 12, ferner beinhaltend den Auftrag eines temporären Hilfsmediums aus wenigstens einer Düse zur temporären Unterstützung des besagten Materials während der schichtweisen Herstellung des Flächengebildes.

14. Verfahren nach Anspruch 13, wobei dieses Verfahren ferner den Verfahrensschritt der Beseitigung des temporären Hilfsmediums beinhaltet.

15. Verfahren nach Anspruch 13 oder Anspruch 14, wobei das temporäre Hilfsmedium ein Material beinhaltet, das aus Schmelzharzen und Wachsen ausgewählt wird.

16. Verfahren nach einem der Ansprüche 1 bis 3, wobei das Verfahren zur Herstellung des Flächengebildes die Schmelzschichtung beinhaltet.

17. Verfahren nach Anspruch 16, wobei das Material aus einer oder mehreren Düsen (13) extrudiert wird.

18. Verfahren nach Anspruch 16 oder Anspruch 17, wobei das Material aus einem der folgenden Werkstoffe entweder einzeln oder in Kombination ausgewählt wird: Polyester, Polyamide, Polyethylene mit hohem Molekulargewicht, Polyphenylensulfid, thermoplastische Polyurethane und PEEK.

19. Verfahren nach einem der Ansprüche 16 bis 18, wobei dieses Material den Düsen (13) als flexibler Feststoffstrang zugeführt wird.

20. Verfahren nach einem der Ansprüche 16 bis 19, ferner beinhaltend die Bereitstellung eines temporären Hilfsmediums zur temporären Unterstützung dieses Materials während der schichtweisen Herstellung des Flächengebildes.

21. Verfahren nach Anspruch 20, wobei dieses Verfahren ferner den Verfahrensschritt der Beseitigung des temporären Hilfsmediums beinhaltet.

22. Verfahren nach Anspruch 20 oder Anspruch 21, wobei das temporäre Hilfsmedium ein aus den folgenden Werkstoffen einzeln oder in Kombination ausgewähltes Material beinhaltet: Poly(2-Ethyl-2-Oxazolin), Polyvinylalkohol, Polyethylenoxid, Methylvinylether, Polyvinylpyrrolidon-haltige Polymere, Maleinsäurehaltige Polymere und alkalilösliche Basispolymere mit Carboxylsäure und Weichmacher.

23. Verfahren nach einem der Ansprüche 1 bis 22, wobei Mittel vorgesehen sind, mit denen eine Gruppe von in Maschinenrichtung verlaufenden Fäden in das Flächengebilde eingetragen wird.

24. Verfahren nach einem der Ansprüche 1 bis 23, wobei das Flächengebilde eine Papiermaschinenbespannung ist.

## Revendications

1. Procédé de fabrication d'une toile à partir d'un matériau comprenant les étapes suivantes : - acheminent du matériau au moyen d'au moins une buse (13) sur une courroie mobile (14), dans lequel ladite buse (13) est mobile de façon à effectuer un mouvement de translation et la distance entre ladite buse (13) et la courroie (14) est réglable, et dans lequel le débit et le mouvement de translation de la buse (13) sont régulés de sorte que ladite buse (13) distribue le matériau d'une manière régulée pour que la toile soit formée couche par couche.

2. Procédé selon la revendication 1, dans lequel une tête d'alimentation comporte une pluralité de buses (13).

3. Procédé selon la revendication 1, dans lequel une pluralité de têtes d'alimentation comporte une pluralité de buses (13).

4. Procédé selon l'une quelconque des revendications 1 à 3, dans lequel la toile comprend un modelage par dépôt sélectif.

5. Procédé selon l'une quelconque des revendications 1 à 4, dans lequel le débit du matériau à travers la buse (13) est quantifié.

6. Procédé selon la revendication 5, dans lequel les buses (13) distribuent ensemble environ 12 000 gouttes par seconde.

7. Procédé selon l'une quelconque des revendications 1 à 6, dans lequel le matériau est un matériau polymère fusible dont la viscosité varie dans la plage de 2 à 200 centipoises, mesurée à 20 °C.

8. Procédé selon la revendication 7, dans lequel le matériau est un matériau polymère fusible dont la viscosité varie dans la plage de 5 à 40 centipoises, mesurée à 20 °C.

9. Procédé selon l'une quelconque des revendications 1 à 8, dans lequel le matériau est choisi parmi l'un quelconque des matériaux suivants, soit seul ou en association : - des polyamides, des copolyamides, des polyesters, des copolyesters, des esters d'amide, des résines d'oléfines, des uréthanes, des uréthanes d'amide et des sulfones.

10. Procédé selon l'une quelconque des revendications 1 à 6, dans lequel le matériau comprend un matériau durcissable par rayonnement.

11. Procédé selon la revendication 10, dans lequel le matériau comprend un matériau durcissable par rayonnement UV.

12. Procédé selon la revendication 11, dans lequel le matériau durcissable par rayonnement UV est choisi parmi l'une quelconque des matériaux suivants, soit seule ou en association : - des acrylates d'époxy, des acrylates de polyester, des acrylates de silicone et des acrylates d'uréthane.

13. Procédé selon l'une quelconque des revendications 1 à 12, qui comprend en outre l'acheminement, à partir d'au moins une buse, d'un milieu de support temporaire pour offrir un support temporaire audit matériau pendant la fabrication de la toile couche par couche.

14. Procédé selon la revendication 13, dans lequel ledit procédé comprend en outre l'étape d'élimination du milieu de support temporaire.

15. Procédé selon la revendication 13 ou la revendication 14, dans lequel le milieu de support temporaire comprend un matériau choisi parmi des résines et des cires thermofusibles.

16. Procédé selon l'une quelconque des revendications 1 à 3, dans lequel le procédé de fabrication de la toile comprend un modelage par dépôt en fusion.

17. Procédé selon la revendication 16, dans lequel le matériau est extrudé à partir d'une ou de plusieurs buses (13).

18. Procédé selon la revendication 16 ou la revendication 17, dans lequel le matériau est choisi parmi l'un quelconque des matériaux suivants, soit seul ou en association : - des polyesters, des polyamides, des polyéthylènes à poids moléculaire élevé, du sulfure de polyphénylène, des polyuréthanes thermoplastiques et des PEEK.

19. Procédé selon l'une quelconque des revendications 16 à 18, dans lequel ledit matériau est acheminé à la buse (13) sous la forme d'un brin flexible d'un matériau solide.

20. Procédé selon l'une quelconque des revendications 16 à 19, qui comprend en outre un milieu de support temporaire pour procurer un support temporaire à audit matériau pendant la fabrication de la toile couche par couche.

21. Procédé selon la revendication 20, dans lequel ledit procédé comprend en outre l'étape d'élimination du milieu de support temporaire.

22. Procédé selon la revendication 20 ou la revendication 21, dans lequel le milieu de support temporaire comprend un matériau choisi parmi les matériaux suivants, soit seul ou en association : - une poly(2-éthyl-2-oxazoline), un alcool polyvinylique, un oxyde de polyéthylène, un éther vinylique de méthyle, des polymères à base de polyvinylpyrrolidone, des polymères à base d'acide maléique et des polymères d'une base soluble en milieu alcalin qui comprend de l'acide carboxylique et un plastifiant.

23. Procédé selon l'une quelconque des revendications 1 à 22, dans lequel des moyens sont fournis pour acheminer un ensemble de fils dans le sens machine dans la toile.

24. Procédé selon l'une quelconque des revendications 1 à 23, dans lequel la toile est un habillage pour machine à papier.
